# EUROPEAN PATENT SPECIFICATION

(11) **EP 2 674 612 B1**
(45) Date of publication and mention of the grant of the patent: **05.10.2016**
(21) Application number: 12382235.5
(22) Date of filing: 11.06.2012
(51) Int. Cl.: F03D 1/06

(54) **Blade for a wind turbine**
Schaufel für eine Windturbine
Pale d'éolienne

(43) Date of publication of application: 18.12.2013
(73) Proprietor: ALSTOM Renewable Technologies, 38100 Grenoble (FR)
(72) Inventor: Feigl, Luca, 08006 Barcelona (ES)
(74) Representative: ZBM Patents - Zea, Barlocci & Markvardsen

(56) References cited:
- WO-A1-2007/073735
- WO-A1-2010/149806
- WO-A1-2012/062846
- JP-A- 2007 132 295

## Description

The present application relates to a blade for a wind turbine and a wind turbine itself. It further relates to methods of manufacturing a wind turbine blade half and a wind turbine blade.

### BACKGROUND ART

The blades in a wind turbine are typically attached, at a blade root portion, to a rotor hub, either directly or through an extender.

Typically, the blades are made from composite materials: reinforcing fibres may be bonded to one another with a resin and, subsequently, cured to consolidate. Different kinds of fibres (e.g. glass, carbon, combinations) and resins (e.g. epoxy) may be used in different forms (e.g. prepreg, fibre sheets). Such composite materials may not have the structural integrity to provide a secure fixing mechanism into which, for example, threaded bolts may be directly inserted. It is thus known for wind turbine blades to comprise metal inserts or bushings which are embedded in the blade root in a direction parallel to that of the longitudinal axis of the blade. Studs, bolts or rods can be used in combination with these bushings to achieve a secure connection between the hub or extender and the blade. It is thus important for a blade root portion to comprise a (circular) mounting surface matching the hub's or extenders' mounting surface.

In general terms a typical manufacturing process of a wind turbine blade may comprise a first step of moulding and curing two separate longitudinal blade shells made out of composite material and a second step of joining together these two blade shells and removing the final blade from the mould. Alternatively, a complete blade may be manufactured in a single moulding step.

Although blades are made from composite material in order to reduce its weight, it is important to consider the fact that a finished blade, made of composite, still has a considerable weight. Once a blade has been manufactured it may remain in storage until the wind turbine is finally installed. Said storage may last from e.g. one month up to one year.

Therefore, a problem derived from above mentioned storage time is that during storage, a blade may deform in a blade root portion due to its own weight. This may cause e.g. an ovalization of a circular blade root mounting surface.

Another problem, related to the one mentioned above derives from accelerating the manufacturing process of the blade. It is becoming common practice nowadays to join two blade shells together and remove them from the mould relatively quickly. In these cases, the resin may not be fully cured yet and the blades may still be relatively soft. Furthermore, composite materials are well-known for shrinking upon curing. Both things may cause a deformation of the blade root portion of the blade that may lead to incompatibilities between the hub and the blade root or to a cumbersome blade mounting process.

In practice, a deformation of the blade root may lead to a more vulnerable attachment at the hub. The attachment holes of the blade root may not be completely aligned with the attachment holes of the hub or extender, and the studs or bolts used for connecting the blade to the hub may not be completely centered in their holes. In operation, these studs or bolts may be subjected to transverse loads, potentially shortening their lifetime and the lifetime of the blades.

For this reason, it is also known to provide e.g. a metal flange along the periphery of the annular mounting surface of the blade root portion. Such a flange helps to provide a more even mounting surface for attachment of the blade to the hub. The mounting flange may be attached to the blade using a plurality of small bolts or screw or adhesives. This however can be rather time consuming, especially when bolts or screws are being used and it and furthermore, the small bolts or screws may add local stresses on the blade root portion of the blade thus potentially shortening the lifetime of the blade. It may still happen that deformations occurring during storage, or local deformations caused by the small bolts or screw, cause the holes in the blade on the one hand and the holes in the hub on the other hand to be slightly misaligned.

Document WO2010149806 relates to a method for stiffening a wind turbine blade root which includes a stiff element to which a series of inserts are bonded, the stiff element providing an interface for joining the blade and the wind turbine.

Thus, there still exists a need to provide a blade with a robust blade root portion such that deformations of its mounting surface are minimized and a robust attachment to a hub or extender of the wind turbine can be provided. At the same time it is desirable that such a blade can be removed from the mould before the curing process is fully completed in order to speed up manufacturing process and be more cost-effective without losing robustness of its blade root portion.

### SUMMARY

According to a first aspect a blade for a wind turbine is provided in claim 1. The blade comprises a blade root portion defining a mounting surface for coupling to a hub or extender of the wind turbine and comprising a plurality of first holes provided with an insert. The blade root portion further comprises a mounting flange arranged in the periphery of the mounting surface and provided with second holes, wherein the inserts comprise a first end embedded in the blade root portion and a second end opposite to said first end, the second end protruding beyond the mounting surface, and wherein the second ends are fitted in the second holes of the mounting flange and the mounting flange is attached to the blade by means of the inserts wherein the mounting flange comprises two halves, each half having ends coupled to complementary ends of the other half.

According to this aspect, the inserts are inserted in the second holes of the mounting flange and at the same they are also embedded in the blade root portion of the blade. This way, the inserts together with the mounting flange may constitute a relatively rigid unity working together against deformation forces acting on the blade root portion thus reducing undesired deformations due to e.g. the blade's own weight and/or due to speeding up the manufacturing process of the blades. Also, the use of such a relatively rigid structure formed by the inserts and the mounting flange contributes towards speeding up the moulding step of the blade as the desired shape and dimensions of the blade root mounting surface may be better ensured. This contributes to a better attachment of the blade to the hub (or to an extender) as a mounting surface fulfilling manufacturing tolerances ensures a proper alignment of the holes of the mounting flange with those of the inserts embedded in the blade root portion of the blade thus enabling proper insertion of fasteners for securing the blade to the hub.

In some embodiments, the mounting flange may be attached to the blade only by means of the inserts. This way no other fastening means such as screws of bolts are required to keep the holes of the flange aligned with the holes of the blade root thus avoiding local stresses on the blade root portion of the blade caused by these screws or bolts. Furthermore, if a further step of joining a mounting flange to a blade may be avoided, the manufacturing process may be faster as the blade can be taken out of the mould before the curing process is complete.

Different ways of fitting the inserts in the holes of the mounting flange may be foreseen.

In some embodiments, one or more second ends of the internal inserts and an inner side of the corresponding second holes may comprise a straight shape and an inner diameter of the second holes may be slightly smaller than an outer diameter of the second ends of the inserts. In these cases, an interference fit between inserts and mounting flange may be achieved by joining these two parts e.g. by shrink fitting.

In some embodiments, one or more second ends of the inserts may comprise an outer surface having a tapered shape. Such a tapered shape in combination with a complementary shape of the second holes of the mounting flange may help to ensure a proper and easy fit between both parts (inserts and mounting flange).

In some embodiments, one or more second ends of the inserts may comprise a protruding element extending in a plane substantially perpendicular to that of a longitudinal axis of the insert and an inner side of the corresponding second holes may comprise an indentation in which said protruding element can be positioned. This way a hooking connection may be established between the mounting flange and the inserts which may not need additional fastening means between both parts.

In some embodiments, one or more second ends of the inserts may comprise a threaded portion and an inner side of the corresponding second holes may comprise an indentation in which a nut, matching said threaded portion, can be inserted. This alternative may be a different way of achieving a hooking connection between the mounting flange and the inserts which may not need additional fastening means between them.

In some embodiments, one or more second ends of the inserts may comprise an external thread and an inner side of the corresponding second holes may comprise a thread that is complementary to the external thread of the inserts. This is a further alternative for achieving a hooking connection between the mounting flange and the inserts which may not need additional fastening means between them.

Another aspect provides a wind turbine rotor comprising a hub and at least one blade substantially as hereinbefore described.

A further aspect provides a method of manufacturing a wind turbine blade half. The method comprises the steps of joining a plurality of inserts to half a mounting flange, arranging the resulting assembly inserts-half mounting flange together with fibres in a mould, introducing resin in the mould and curing the resin such that the assembly inserts-half mounting flange is joined to the resin a fibres. This way, the assembly inserts-half mounting flange is moulded together with the fibres resulting in rigid attachment flange-blade through the inserts which are also embedded in the blade root portion of the blade.

Additional objects, advantages and features of embodiments of the present blade will become apparent to those skilled in the art upon examination of the description, or may be learned by practice of the invention.

### BRIEF DESCRIPTION OF THE DRAWINGS

Particular embodiments of the present blade will, be described in the following by way of non-limiting examples, with reference to the appended drawings, in which:
Figure 1 shows a section view of the attachment of a blade root portion of the blade to a pitch bearing of the wind turbine according to an embodiment;
Figures 2-5b show each a section view of the attachment insert-mounting flange according to different embodiments;
Figure 6a shows a mounting flange according to an embodiment; and
Figure 6b shows an assembly half a mounting flange-inserts according to an embodiment.

### DETAILED DESCRIPTION OF EMBODIMENTS

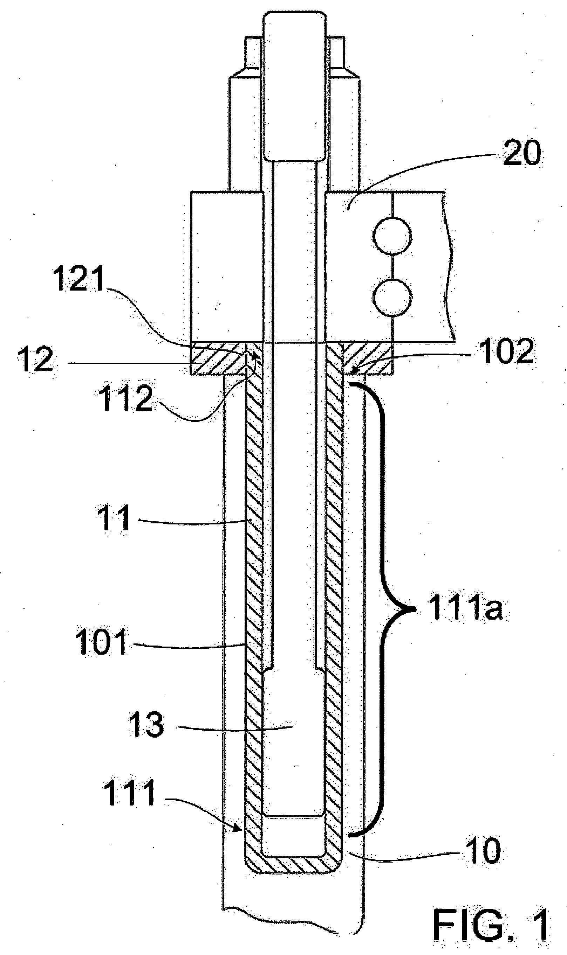

Figure 1 shows a cross-section of the attachment of a blade to a pitch bearing 20 for attachment to a hub of the wind turbine. The blade may comprise a blade root portion 10 for coupling to a hub of the wind turbine through the pitch bearing 20. In this case, the blade root portion may be substantially annular. The blade root 10 may comprise a plurality of first holes 101 provided with an internal (metal) bushing 11. An annular mounting flange 12 may further be provided along a periphery of an annular mounting surface 102 of the blade root. Said mounting flange 12 may be provided with second holes 121. The bushings 11 may comprise a first end 111 and a main portion 111 a embedded in the blade root portion 10 and a second end 112 opposite to said first end 111. Such a second end 112 may protrude beyond the mounting surface 102 and may be fitted in the second holes 121 of the mounting flange 12.

The attachment blade-mounting flange may thus be a relatively rigid connection as the flange is attached to the metal inserts embedded in the blade root portion of the blade. The holes of the mounting flange 121 and the holes 101 of the blade root 10 may thus remain aligned independently on whether the blade is taken out of the mould before the curing process is completed and/or the blade has been left in storage for quite a long time and as mentioned before, this enables a proper insertion of fasteners 13 for securing the blade to the hub.

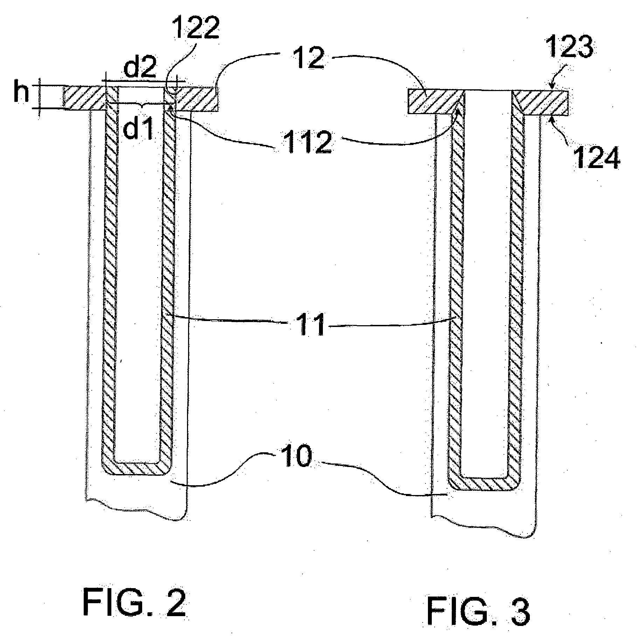

Figure 2 shows an assembly mounting flange-bushing according to a first embodiment in which an outer surface of the second ends 112 of the bushings 11 and an inner side 122 of the second holes 121 of the mounting flange 12 may comprise a straight shape. In these cases, an inner diameter d2 of the second holes 121 may be bigger than an outer diameter d1 of the second ends 112 of the bushings 11. This way, an interference fit or friction fit may be established between both parts forming the assembly e.g. by using a shrink fitting technique.

Figure 3 shows an assembly mounting flange-bushing according to a second embodiment in which an outer surface of the second ends 112 of the bushings 11 may comprise a decreasing outer diameter d2 shape (considering a direction from the first end 111 to second end 112 of the bushing). In these cases, an inner side 122 of the second holes 121 of the mounting flange may comprise a complementary shape having a decreasing inner diameter d2 (considering a direction from a side of the flange 124 facing the blade towards a side of the flange 123 facing the hub when the blade is coupled to the hub).

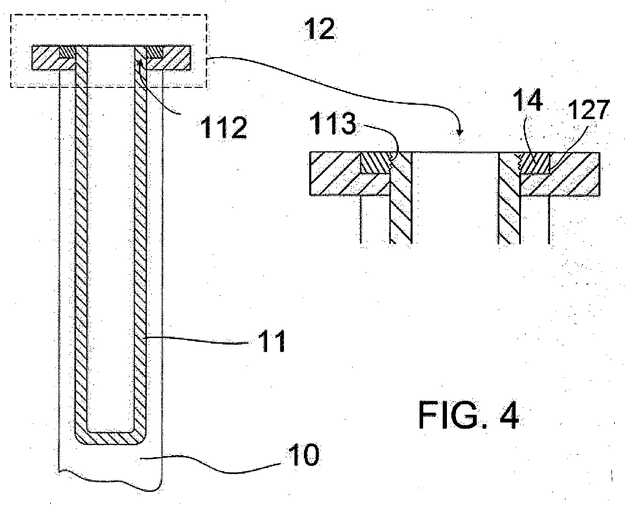

Figure 4 and its enlarged detail show an assembly mounting flange-bushing according to a third embodiment in which the second ends 112 of the internal bushings may comprise a threaded portion 113 and an inner side of the corresponding second holes may comprise an indentation 127 in which a nut 14 matching the threaded portion 113 can be inserted. In an alternative embodiment (not shown), the outer surface of the second ends may be threaded and an inner side of the corresponding second holes may comprise a matching thread. With these embodiments, the inserts may be fixed to the mounting flange by screwing either the bushings itself or the nut which result in a rigid attachment between both parts (mounting flange and bushings).

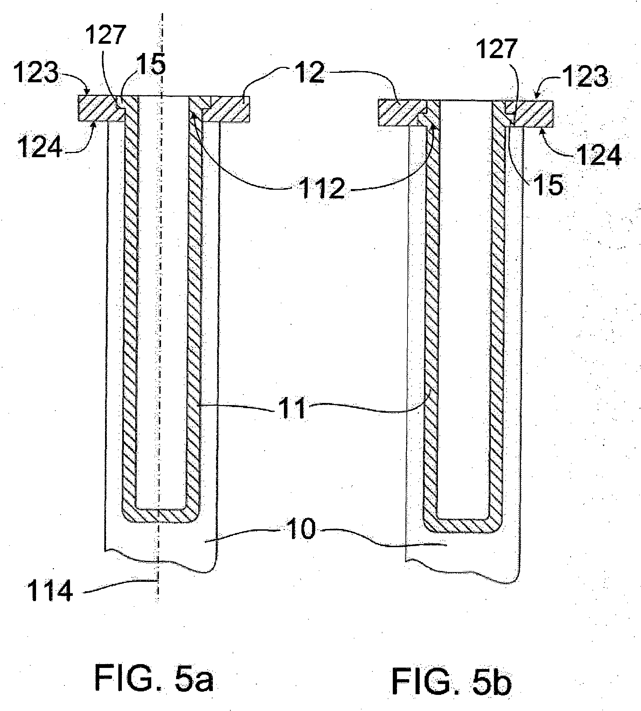

Each of figures 5a and 5b shows an assembly mounting flange-bushing according to a fourth embodiment in which the second ends 112 of the internal bushings may comprise a protruding element 15 arranged extending in a plane substantially perpendicular to that of a longitudinal axis 114 of the bushing and an inner side of the corresponding second holes may comprise an indentation 127 in which said protruding element 15 can be inserted.

Figure 5a shows an example in which the protrusion 15 may be provided at the end point of the second end 112 of the bushing and the indentation 127 may be arranged close to a side of the flange 123 facing the hub. This embodiment defines a hooking connection between inserts and mounting flange.

Figure 5b shows an example in which the indentation 127 may be arranged close to a side of the flange 124 facing the blade.

According to the examples shown in figures 1-5b the second ends 112 of the mounting flange may be fully inserted into the second holes 121, this means that the totality of the flange's height in an axial direction (see figure 2) of the annular mounting flange and the mounting flange 12 may be attached to the blade root 10 by means of said bushings 11. It should be understood that the second ends of the inserts may also be inserted a different height in an axial direction of the annular mounting flange.

In all previously described cases a further welding point may be added between each insert or bushing and the mounting flange to ensure their attachment. A welded attachment may also be established.

In all cases the inserts may be arranged along the whole blade root portion thus radial rigidity of the blade root portion may be improved.

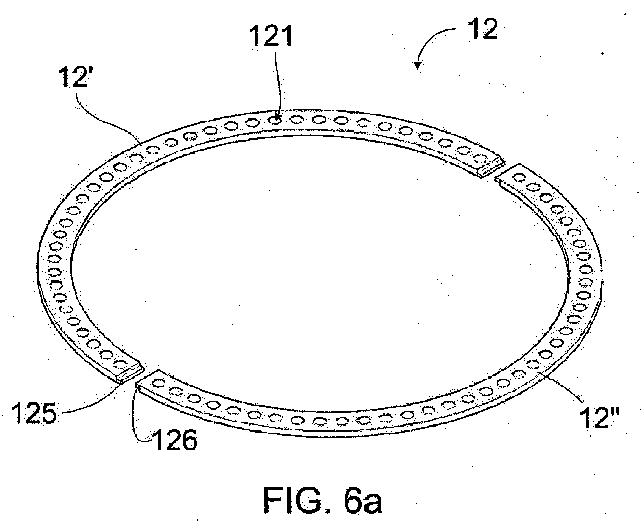

Figure 6a shows an annular mounting flange 12 comprising two halves 12', 12". Each of the two flange halves 12', 12" comprises through holes 121 equidistantly distributed along its half annular surface. The ends of the flange halves 12' are complementary for easy attachment. A flange halve 12' comprises e.g. an indentation 125 or similar at each of its ends and the indentations may be complementary to indentations 126 provided at each of the ends of the second half 12" such that both flange halves 12', 12" may be coupled forming an annular mounting flange 12.

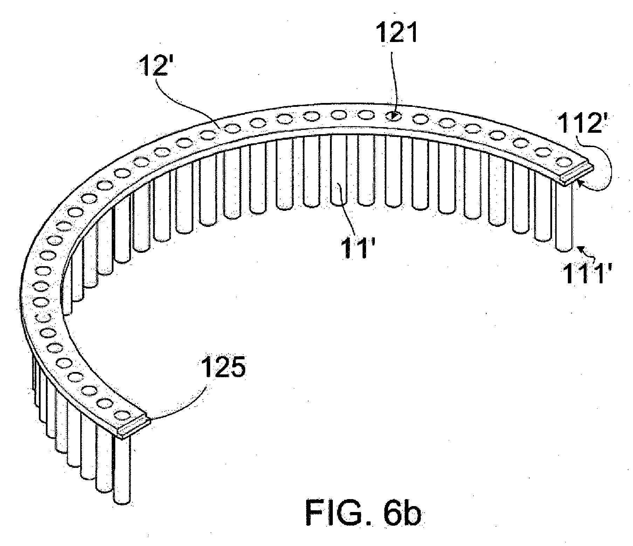

In addition to what was shown in figure 6a with respect to the annular mounting flange, figure 6b shows an assembly of half an annular mounting flange 12' fitted with metal inserts 11' according to an embodiment. In figure 6b one end 112' of the metal inserts 11' may be fitted into the through holes 121 of half an annular mounting flange 12'. The same may be done for the other mounting flange half. The metal inserts 11' may thus comprise a free end 111' that may be embedded into fibres forming the blade root portion of the blade.

The present application further describes a method of manufacturing a blade half comprising the steps of joining a plurality of metal inserts 11' with half an annular mounting flange 12', then arranging the resulting assembly metal inserts-half a mounting flange together with fibres in a mould, introducing resin in the mould and curing the resin, such that the assembly inserts. The mounting flange half is joined to the resin and fibres. Such an arrangement can be done in the following manner e.g.: positioning prepregs and then curing or arranging fibres first and then introducing the resin e.g. by RTM (Resin Transfer Moulding).

This way a blade shell comprising half a blade root provided with embedded metal inserts which are also attached to half a rigid mounting flange can be manufactured. Such a blade shell may be taken from the mould before the curing process is complete as the assembly metal inserts-mounting flange will maintain the semi-circularity of the blade shell. Furthermore, joining together two blade shells being manufactured as described above result in a blade in which deformations of its blade root mounting surface are at least partly minimized.

Although only a number of particular embodiments and examples of the invention have been disclosed herein, it will be understood by those skilled in the art that other alternative embodiments and/or uses of the invention and obvious modifications and, equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. Blade for a wind turbine comprising a blade root portion (10), the blade root portion (10) defining a mounting surface (102) for coupling to a hub or extender of the wind turbine and comprising a plurality of first holes (101) provided with an insert (11), the blade root portion further comprising an annular mounting flange (12) arranged in the periphery of the mounting surface (102) and provided with second holes (121), wherein the inserts (11) comprise a first end (111) embedded in the blade root portion (10) and a second end (112) opposite to said first end (111), the second end (112) protruding beyond the mounting surface (102) of said blade root portion (10), and wherein the second ends (112) are fitted in the second holes (121) of the mounting flange (12) and the mounting flange (12) is attached to the blade by means of the inserts (11), **characterized in that** the mounting flange (12) comprises two mounting flange halves (12', 12"), each mounting flange half (12', 12") having ends coupled to complementary ends of the other mounting flange half (12', 12").

2. Blade according to claim 1, wherein each end of the mounting flange halves (12', 12") comprises an indentation (125, 126).

3. Blade according to any of claims 1 or 2, wherein the mounting flange (12) is attached to the blade only by means of the inserts (11).

4. Blade according to any of claims 1-3, wherein one or more second ends (112) of the internal inserts (11) and an inner side (122) of the corresponding second holes (121) comprise a straight shape and an inner diameter (d2) of the second holes (121) is slightly smaller than an outer diameter (d1) of the second ends (112) of the inserts (11).

5. Blade according to any of claims 1-4, wherein one or more second ends (112) of the inserts (11) comprises an outer surface having a tapered shape.

6. Blade according to any of claims 1-5, wherein one or more second ends (112) of the inserts (11) comprises a protruding element (15) extending in a plane substantially perpendicular to that of a longitudinal axis (114) of the insert (11) and an inner side of the corresponding second holes comprises an indentation (127) in which said protruding element (15) can be positioned.

7. Blade according to any of claims 1-6, wherein one or more second ends (112) of the inserts (11) comprises a threaded portion (113) and an inner side of the corresponding second holes (121) comprises an indentation (127) in which a nut (14), matching said threaded portion (113), can be inserted.

8. Blade according to any of claims 1-7, wherein one or more second ends (112) of the inserts (11) comprises an external thread and an inner side of the corresponding second holes comprises a thread that is complementary to the external thread of the inserts (11).

9. Blade according to any of claims 1-8, wherein the inserts (11) are further welded to the second holes (121).

10. Wind turbine rotor comprising a hub and at least one blade according to any of claims 1-9.

11. Method of manufacturing a wind turbine blade half, the method comprising the steps of
joining a plurality of inserts (11') to half a mounting flange (12'; 12") wherein the mounting flange half (12'; 12") has ends adapted to be coupled to ends of another mounting flange half (12'; 12");
arranging the resulting assembly inserts-half mounting flange together with fibres in a mould;
introducing resin in the mould; and
curing the resin, such that the assembly inserts-half mounting flange is joined to the resin and fibres.

12. Method of manufacturing a wind turbine blade comprising manufacturing two blade halves with a method according to claim 11, joining together the two blade halves and coupling together the ends of the mounting flange halves to form an annular mounting flange.

13. Method according to claim 12, wherein each end of the mounting flange halves (12'; 12") comprises an indentation (125, 126).

## Patentansprüche

1. Blatt für eine Windturbine umfassend einen Blattwurzelteil (10), wobei der Blattwurzelteil (10) eine Montageoberfläche (102) zur Kopplung mit einer Nabe oder Verlängerungsstück der Windturbine definiert und eine Vielzahl von ersten Bohrungen (101) umfasst, die mit einem Einsatz (11) versehen sind, wobei der Blattwurzelteil weiterhin einen ringförmigen Montageflansch (12) umfasst, der in der Umfangslänge der Montageoberfläche (102) angeordnet ist und mit zweiten Bohrungen (121) versehen ist, wobei die Einsätze (11) ein erstes Ende (111) umfassen, das in dem Blattwurzelteil (10) eingebettet ist und ein zweites Ende (112) umfassen, das gegenüber dem ersten Ende (111) liegt, wobei das zweite Ende (112) über die Montageoberfläche (102) des Blattwurzelteils (10) hinaus herausragt, und wobei die zweiten Enden (112) in den zweiten Bohrungen (121) des Montageflansches (12) eingepasst sind und der Montageflansch (12) an dem Blatt mittels der Einsätze (11) befestigt ist, **dadurch gekennzeichnet, dass** der Montageflansch (12) zwei Montageflanschhälften (12', 12") umfasst, wobei jede Montageflanschhälfte (12', 12") Enden hat, die jeweils mit ergänzenden Enden der anderen Montageflanschhälfte (12', 12") gekoppelt sind.

2. Blatt nach Anspruch 1, wobei jedes Ende der Montageflanschhälften (12', 12") eine Einbuchtung (125, 126) umfasst.

3. Blatt nach einem der Ansprüche 1 oder 2, wobei der Montageflansch (12) an dem Blatt nur mittels der Einsätze (11) befestigt ist.

4. Blatt nach einem der Ansprüche 1-3, wobei ein zweites Ende (112) oder mehr der inneren Einsätze (11) und eine Innenseite (122) der entsprechenden zweiten Bohrungen (121) eine gerade Form umfassen und ein Innendurchmesser (d2) der zweiten Bohrungen (121) geringfügig kleiner als ein Außendurchmesser (d1) der zweiten Enden (112) der Einsätze (11) ist.

5. Blatt nach einem der Ansprüche 1-4, wobei ein zweites Ende (112) oder mehr der Einsätze (11) eine Außenoberfläche umfasst, die eine verjüngte Form hat.

6. Blatt nach einem der Ansprüche 1-5, wobei ein zweites Ende (112) oder mehr der Einsätze (11) ein herausragendes Element (15) umfasst, das sich in einer Ebene erstreckt, die im Wesentlichen senkrecht zu der einer Längsachse (114) des Einsatzes (11) ist und eine Innenseite der entsprechenden zweiten Bohrungen eine Einbuchtung (127) umfasst, in der das herausragende Element (15) positioniert werden kann.

7. Blatt nach einem der Ansprüche 1-6, wobei ein zweites Ende (112) oder mehr der Einsätze (11) einen Gewindeteil (113) umfasst und eine Innenseite der entsprechenden zweiten Bohrungen (121) eine Einbuchtung (127) umfasst, in der eine Gewindemutter (14), die zum Gewindeteil (113) passt, eingesetzt werden kann.

8. Blatt nach einem der Ansprüche 1-7, wobei ein zweites Ende (112) oder mehr der Einsätze (11) ein Außengewinde umfasst und eine Innenseite der entsprechenden zweiten Bohrungen ein Gewinde umfasst, welches das Außengewinde der Einsätze (11) ergänzt.

9. Blatt nach einem der Ansprüche 1-8, wobei die Einsätze (11) weiterhin an den zweiten Bohrungen (121) verschweißt sind.

10. Windturbinenrotor umfassend eine Nabe und mindestens ein Blatt nach einem der Ansprüche 1-9.

11. Verfahren zur Herstellung von einer Windturbinenblatthälfte, wobei das Verfahren folgende Schritte umfasst
das Anschließen von einer Vielzahl von Einsätzen (11') an eine Montageflanschhälfte (12'; 12"), wobei die Montageflanschhälfte (12'; 12") Enden hat, die angepasst sind, um mit Enden einer anderen Montageflanschhälfte (12'; 12") gekoppelt zu werden;
das Anordnen der resultierenden Einsätze-Montageflanschhälfte-Anordnung zusammen mit Fasern in eine Form;
das Eingießen von Harz in die Form; und
das Aushärten des Harzes, so dass die Einsätze-Montageflanschhälfte-Anordnung mit dem Harz und den Fasern verbunden wird.

12. Verfahren zur Herstellung von einem Windturbinenblatt umfassend die Herstellung von zwei Blatthälften durch ein Verfahren nach Anspruch 11, das Verbinden der zwei Blatthälften und das Koppeln der Enden der Montageflanschhälften, um einen ringförmigen Montageflansch zu bilden.

13. Verfahren nach Anspruch 12, wobei jedes Ende der Montageflanschhälften (12', 12") eine Einbuchtung (125, 126) umfasst.

## Revendications

1. Pale pour une éolienne comprenant une partie de racine de pale (10), définissant la partie de racine de pale (10) une surface de montage (102) pour le couplage à un moyeu ou élément d'extension de l'éolienne et comprenant une pluralité de premiers trous (101) fournis avec un insert (11), comprenant en outre la partie de racine de pale une bride de montage annulaire (12) disposée dans la périphérie de la surface de montage (102) et fournie avec des deuxièmes trous (121), dans laquelle les inserts (11) comprennent un premier bout (111) encastré dans la partie de racine de pale (10) et un deuxième bout (112) situé en face dudit premier bout (111), saillissant le deuxième bout (112) au-delà de la surface de montage (102) de ladite partie de racine de pale (10), et dans laquelle les deuxièmes bouts (112) sont placés dans les deuxièmes trous (121) de la bride de montage (12) et la bride de montage (12) est attachée à la pale moyennant les inserts (11), **caractérisée en ce que** la bride de montage (12) comprend deux moitiés de bride de montage (12', 12"), ayant chaque moitié de bride de montage (12', 12") des bouts couplés à des bouts complémentaires de l'autre moitié de bride de montage (12', 12").

2. Pale selon la revendication 1, dans laquelle chaque bout des moitiés de bride de montage (12', 12") comprend une encoche (125, 126).

3. Pale selon l'une quelconque des revendications 1 ou 2, dans laquelle la bride de montage (12) est attachée à la pale seulement moyennant les inserts (11).

4. Pale selon l'une quelconque des revendications 1-3, dans laquelle un ou plus des deuxièmes bouts (112) des inserts intérieures (11) et un côté intérieur (122) des correspondants deuxièmes trous (121) comprennent une forme droite et un diamètre intérieur (d2) des deuxièmes trous (121) est légèrement plus petit qu'un diamètre extérieur (d1) des deuxièmes bouts (112) des inserts (11).

5. Pale selon l'une quelconque des revendications 1-4, dans laquelle un ou plus des deuxièmes bouts (112) des inserts (11) comprend une surface extérieure ayant une forme effilée.

6. Pale selon l'une quelconque des revendications 1-5, dans laquelle un ou plus des deuxièmes bouts (112) des inserts (11) comprend un élément en saillie (15) s'étendant dans un plan essentiellement perpendiculaire à celui d'un axe longitudinal (114) de l'insert (11) et un côté intérieur des correspondants deuxièmes trous comprend une encoche (127) dans laquelle ledit élément en saillie (15) peut être situé.

7. Pale selon l'une quelconque des revendications 1-6, dans laquelle un ou plus des deuxièmes bouts (112) des inserts (11) comprend une partie filetée (113) et un côté intérieur des correspondants deuxièmes trous (121) comprend une encoche (127) dans laquelle un écrou (14), correspondant à ladite partie filetée (113), peut être inséré.

8. Pale selon l'une quelconque des revendications 1-7, dans laquelle un ou plus des deuxièmes bouts (112) des inserts (11) comprend un filetage extérieur et un côté intérieur des correspondants deuxièmes trous comprend un filetage qui est complémentaire au filetage extérieur des inserts (11).

9. Pale selon l'une quelconque des revendications 1-8, dans laquelle les inserts (11) sont en outre soudés aux deuxièmes trous (121).

10. Rotor d'éolienne comprenant un moyeu et au moins une pale selon l'une quelconque des revendications 1-9.

11. Procédé de fabrication d'une moitié de pale d'éolienne, comprenant le procédé les étapes de
joindre une pluralité d'inserts (11') à une moitié de bride de montage (12' ; 12"), où la moitié de bride de montage (12' ; 12") a des bouts adaptés pour être couplés à des bouts d'autre moitié de bride de montage (12' ; 12") ;
disposer l'ensemble inserts-moitié de bride de montage résultant avec des fibres dans un moule ;
introduire de la résine dans le moule ; et
curer la résine, de façon que l'ensemble inserts-moitié de bride de montage est joint à la résine et aux fibres.

12. Procédé de fabrication d'une pale d'éolienne comprenant fabriquer deux moitiés de pale moyennant un procédé selon la revendication 11, joindre les deux moitiés de pale et coupler les bouts des moitiés de bride de montage afin de former une bride de montage annulaire.

13. Procédé selon la revendication 12, dans lequel chaque bout des moitiés de bride de montage (12', 12") comprend une encoche (125, 126).
